**Europäisches Patentamt**

**European Patent Office**

**Office européen des brevets**

(19)

(11) Veröffentlichungsnummer: **0 553 647 B1**

(12)

# EUROPÄISCHE PATENTSCHRIFT

(45) Veröffentlichungstag der Patentschrift: **13.12.95**

(51) Int. Cl.[6]: **C09D 7/00**

(21) Anmeldenummer: **93100443.6**

(22) Anmeldetag: **14.01.93**

(54) **Wässrige Polymerisatzubereitungen**

(30) Priorität: **28.01.92 DE 4202192**

(43) Veröffentlichungstag der Anmeldung:
**04.08.93 Patentblatt 93/31**

(45) Bekanntmachung des Hinweises auf die
Patenterteilung:
**13.12.95 Patentblatt 95/50**

(84) Benannte Vertragsstaaten:
**AT BE CH DE DK ES FR GB IT LI NL SE**

(56) Entgegenhaltungen:
**EP-A- 0 044 810**
**EP-A- 0 342 996**
**WO-A-92/13912**

**DATABASE WPIL Week 9039, 21. November
1990 Derwent Publications Ltd., London, GB;
AN 90-295681**

**DATABASE WPIL Week 8729, 16. September
1987 Derwent Publications Ltd., London, GB;
AN 87-202060**

(73) Patentinhaber: **BASF Aktiengesellschaft
Carl-Bosch-Strasse 38
D-67063 Ludwigshafen (DE)**

(72) Erfinder: **Dersch, Rolf, Dr.
Kastanienweg 11c
W-6730 Neustadt (DE)**
Erfinder: **Grund, Norbert, Dr.
Merziger Strasse 7b
W-6700 Ludwigshafen (DE)**
Erfinder: **Niessner, Manfred, Dr.
Gotenstrassen 25
W-6707 Schifferstadt (DE)**
Erfinder: **Schneider, Reinhard, Dr.
Raiffeisenstrasse 22
W-6701 Fussgoenheim (DE)**

EP 0 553 647 B1

**Beschreibung**

Die vorliegende Erfindung betrifft wäßrige Polymerisatzubereitungen, enthaltend wenigstens ein im wäßrigen Medium gelöstes und/oder dispers verteiltes polymeres Bindemittel (Polymere I), und 0,001 bis 2 (vorzugsweise 0,01 bis 0,5) Gew.-%, bezogen auf das polymere Bindemittel, im wäßrigen Medium verteilte, von dem polymeren Bindemittel verschiedene, wasserquellbare Polymerisatteilchen (Polymere II), die

a) wasserfrei einen zahlenmittleren Teilchendurchmesser von 0,05 bis 15 $\mu$m aufweisen und

b) zu polymerisierter Form aus einem Gemisch radikalisch polymerisierbarer Monomere aufgebaut sind, das 0,003 bis 3 Mol-% wenigstens eines wenigstens zwei nicht konjugierte ethylenisch ungesättigte Doppelbindungen aufweisenden Monomeren enthält und in nicht polymerisierter Form bei 20°C in Wasser eine Löslichkeit von wenigstens 10 Gew.-% aufweist.

Weiterhin betrifft die vorliegende Erfindung das Verfahren zur Herstellung solcher wäßriger Polymerisatzubereitungen sowie ihre Verwendung als Massen zur Herstellung von Beschichtungen.

Wäßrige Polymerisatzubereitungen, sowohl Lösungen als auch Dispersionen, weisen beim Verdampfen des wäßrigen Mediums die Fähigkeit auf, Polymerisatfilme zu bilden, weshalb wäßrige Polymerisatzubereitungen in vielfältiger Weise zum Beschichten von Substraten, z.B. in Form wäßriger Anstrichfarben, Anwendung finden. Dabei tritt der Charakter des unbeschichteten Substrates, z.B. die Maserung eines Holzes, mit zunehmendem Glanz der Beschichtung in den Hintergrund. Vielfach ist jedoch die Erhaltung des unbeschichteten Erscheinungsbildes beim Beschichten, z.B. Lackieren oder Lasieren, erwünscht, weshalb den zum Beschichten verwendeten wäßrigen Polymerisatzubereitungen Mattierungsmittel zugesetzt werden. Aus H. Kittel, Lehrbuch der Lacke und Beschichtungen, Band III, 1976, Verlag W.A. Colomb, Berlin ist bekannt, als Mattierungsmittel feinteilige natürliche oder synthetische Silikate, mikronisierte Polyolefine oder feinteilige schwerlösliche Metallsalze von Fettsäuren zuzusetzen. Nachteilig an den genannten Mattierungsmitteln ist jedoch, daß deren Einarbeitung in wäßrige Polymerisatzubereitungen üblicherweise der Anwendung von Hilfsmitteln, die z.B. andere Eigenschaften der resultierenden Polymerfilme wie deren Wasserfestigkeit mindern, und/oder erhöhter Scherkräfte bedarf, und die so erhältlichen wäßrigen Zubereitungen hinsichtlich ihrer Lagerstabilität nicht voll zu befriedigen vermögen. Unter anderem erfolgt beim Lagern in der Regel ein Absetzen oder Aufrahmen der Mattierungsmittel, insbesondere bei niederviskosen wäßrigen Polymerisatzubereitungen. Ferner müssen die genannten Mattierungsmittel zur Erzielung einer bestimmten Mattierungswirkung in erhöhten Mengen angewendet werden, was die Qualität der Beschichtung im allgemeinen ebenfalls beeinträchtigt.

Die Aufgabe der vorliegenden Erfindung bestand daher darin, wäßrige Polymerisatzubereitungen zur Verfügung zu stellen, die Mattierungsmittel enthalten, die die genannten nachteiligen Eigenschaften nicht aufweisen. Demgemäß wurden die eingangs definierten wäßrigen Polymerisatzubereitungen gefunden. Die ältere Anmeldung P 4103969.6 umfaßt hingegen polymere Bindemittel enthaltende wäßrige Druckfarbenzubereitungen, die zusätzlich zum polymeren Bindemittel, auf selbiges bezogen, mehr als 8 Gew.-% eines Polymerisats enthalten, das dadurch erhältlich ist, daß man ein Gemisch aus 92,08 Gew.-% Acrlysäure, 7,89 Gew.-% Acrylamid und 0,003 Gew.-% Methylenbisacrylamid nach dem Verfahren der radikalischen Wasser-in-Öl-Emulsionspolymerisation polymerisiert. Die in dieser älteren Anmeldung für sich beschriebenen Wasser-in-Öl-Emulsionspolymerisate werden lediglich als Verdickungs-, Flockungs-, Retentions- und Entwässerungsmittel empfohlen.

Als Polymere I kommen unter anderen vor allem Polykondensate wie Polyester, insbesondere Alkydharze, Polyadditionsprodukte, insbesondere Polyurethane, sowie Polymerisate ungesättigter Monomeren in Betracht. Vorzugsweise werden als Polymere I Polymerisate ungesättigter Monomeren eingesetzt, unter denen diejenigen bevorzugt sind, die durch radikalische Polymerisation, sei es in Substanz, in Lösung oder in wäßriger Emulsion, erhältlich sind. In Wasser lösliche Polymere I werden, unabhängig von ihrer Herstellung, üblicherweise dadurch in die erfindungsgemäßen wäßrigen Zubereitungen eingearbeitet, daß man sie im wäßrigen Medium, das auch in Wasser lösliche organische Lösungsmittel wie Methanol enthalten kann, jedoch vorzugsweise Wasser ist, löst. Die Einarbeitung von im wäßrigen Medium nicht löslichen Polymeren I kann auf dem an sich bekannten Weg der Herstellung wäßriger Sekundärdispersionen vorgenommen werden.

D.h. z.B. die durch radikalische Lösungspolymerisation erhältliche Lösung der Polymeren I wird, in der Regel unter Mitverwendung von Schutzkolloiden und/oder Öl-in-Wasser-Emulgatoren, im wäßrigen Medium dispers verteilt und anschließend in der Regel das organische Lösungsmittel z.B. destillativ entfernt. In entsprechender Weise lassen sich auch Polymerschmelzen sekundär dispergieren. Der Aufwand des sekundären Dispergierens läßt sich jedoch in der Regel vermeiden, indem die radikalische Polymerisation unmittelbar als radikalische wäßrige Emulsionspolymerisation (im folgenden zwecks eindeutiger begrifflicher Abgrenzung Öl-in-Wasser-Emulsionspolymerisation genannt) ausgeführt wird, weshalb dieses an sich bekannte Herstellverfahren einschließlich der dabei resultierenden, im wäßrigen Medium dispergierten, Polymeren I erfindungsgemäß bevorzugt ist. Dabei werden die zu polymerisierenden Monomeren, im allgemeinen unter Mitverwendung von Schutzkolloiden und/oder Öl-in-Wasser-Emulgatoren, im wäßrigen Dispergiermedium fein verteilt und normalerweise unter Zusatz wirksamer Mengen von, üblicherweise im wäßrigen Medium löslichen, radikalischen Polymerisationsinitiatoren polymerisiert (vgl. Dispersionen synthetischer Hochpolymerer, Bd. I, F. Hölscher, Springer-Verlag, New York, 1969).

Als radikalisch polymerisierbare Monomere zur Herstellung (vorzugsweise nach dem Verfahren der radikalischen Öl-in-Wasser-Emulsionspolymerisation) von Polymeren I (diese Monomeren werden nachfolgend als Monomere I bezeichnet) eignen sich u.a. insbesondere monoethylenisch ungesättigte Monomere wie Olefine, z.B. Ethylen, vinylaromatische Monomere wie Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden $\alpha$, $\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl und -2-ethylhexylester, Maleinsäuredimethylester, Maleinsäuredi-n-butylester oder -iso-butylester, Nitrile $\alpha$, $\beta$-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die bezogen auf die Gesamtmenge der nach dem Verfahren der radikalischen wäßrigen Öl-in-Wasser-Emulsionspolymerisation zu polymerisierenden Monomeren I, normalerweise einen Anteil von mehr als 50 Gew.-% auf sich vereinen. Monomere I, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren I, von weniger als 50 Gew.-%, in der Regel 0,5 bis 20, vorzugsweise 1 bis 10 Gew.-%, miteinpolymerisiert.

Beispiele für derartige Monomere I sind 3 bis 6 C-Atome aufweisende $\alpha$, $\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere I, die üblicherweise die innere Festigkeit der Verfilmungen der polymeren Bindemittel erhöhen, werden in der Regel ebenfalls nur in untergeordneten Mengen, meist 0,5 bis 10 Gew.-% bezogen auf die Gesamtmenge der zu polymerisierenden Monomeren I, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden $\alpha$, $\beta$-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit $\alpha$, $\beta$-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglykoldiacrylate- und - dimethacrylate wie Ethylenglykoldiacrylat, 1,3-Butylenglykoldiacrylat, 1,4-Butylenglykoldiacrylat sowie Propylenglykoldiacrylat, Divinylbenzol, Vinylmethacrylat, Vinylacrylat, Allylmethacrylat, Allylacrylat, Diallylmaleat, Diallylfumarat oder Methylenbisacrylamid. Neben ungesättigte Doppelbindungen aufweisenden Monomeren können in untergeordneten Mengen, üblicherweise 0,01 bis 2 Gew.-% bezogen auf die zu polymerisierenden Monomeren I, das Molekulargewicht regelnde Substanzen wie tert.-Dodecylmercaptan mit einpolymerisiert werden.

Bevorzugte Klassen von Monomerengemischen I sind solche, die

- zu 70 bis 100 Gew.-% aus Estern der Acryl- und/oder Methacrylsäure mit 1 bis 12 C-Atomen aufweisenden Alkanolen und/oder Styrol

oder

- zu 70 bis 100 Gew.-% aus Styrol und/oder Butadien

oder

- zu 70 bis 100 Gew.-% aus Vinylchlorid und/oder Vinylidenchlorid

aufgebaut sind, wobei die Klasse der Acrylate besonders bevorzugt ist und vorzugsweise nachfolgende Monomerenzusammensetzungen I umfaßt:

95 bis 100 Gew.-% wenigstens eines Esters der Acryl- und/oder Methacrylsäure mit 1 bis 8 C-Atome aufweisenden Alkanolen und

0 bis 5 Gew.-% eines oder mehrerer Monomere aus der Gruppe umfassend Acrylsäure, Methacrylsäure, Acrylamid und Methacrylamid.

Zum Aufbau von Polymeren I die insbesondere als Bindemittel in wäßrigen Anstrichfarben geeignet sind, eignen sich als Monomere I vor allem Acrylsäure- und Methacrylsäureester eines $C_1$-$C_8$-Alkanols, Vinylester von $C_2$-$C_{13}$-Alkansäuren sowie $C_5$- bis $C_{10}$-Versatic®-Säuren (Warenzeichen der Firma Shell für Monocarbonsäuren mit längeren Seitenketten und einer tertiären Carboxylgruppe), vinylaromatische Monomere wie Styrol oder Vinyltoluole, Acryl- und Methacrylnitril, Vinylchlorid und Ethylen. Aus der Reihe der Acrylate sind dabei n-, iso- und tert.-Butyl-, n-Hexyl- und 2-Ethylhexylacrylat von besonderem Interesse. Als Methacrylsäureester seien in diesem Zusammenhang vor allem Methyl- und n-Butylmethacrylat genannt, wohingegen aus der Reihe der Vinylester das Vinylacetat, Vinylpropionat, Vinyldodecanoat sowie die Vinylester der Versatic 9- und Versatic 10-Säure bevorzugt sind. Als Hilfsmonomere werden zum Aufbau von Polymeren I für Bindemittel in wäßrigen Anstrichfarben in der Regel 3 bis 5 C-Atome enthaltende $\alpha,\beta$-ethylenisch ungesättigte Mono- oder Dicarbonsäuren sowie deren Amide, Vinylsulfonsäure, Amidopropansulfonsäure, Hyroxyalkylacrylate sowie -methacrylate wie 2-Hydroxyethylacrylat und -methacrylat, vernetzend wirkende Monomere wie Divinylbenzol, Bisacryl- und -methacrylsäureester niederer Alkandiole sowie Alkylol- oder Epoxidgruppen tragende Monomere einpolymerisiert. Die Gesamtmenge dieser Hilfsmonomeren beträgt in der Regel, bezogen auf die Gesamtmenge der zu polymerisierenden Monomeren I, weniger als 10 Gew.-%. Insgesamt werden bei insbesondere für Anstrichfarben geeigneten Polymeren I die Gewichtsanteile der ungesättigten Monomeren I in vorteilhafter Weise so gewählt, daß das Polymere I eine Glasübergangstemperatur von -10 bis 25 °C aufweist. Nach Fox [T.G. Fox, Bull. Am. Phys. Soc. (Ser. II) 1, 123 (1956)] gilt für die Glasübergangstemperatur von Copolymeren in guter Nährung

$$\frac{1}{Tg} = \frac{X^1}{Tg^1} + \frac{X^2}{Tg^2} + \ldots \ldots \frac{X^n}{Tg^n} \qquad ,$$

wobei $X^1$, $X^2$, ..., $X^n$ die Massenbrüche der Monomeren 1, 2, ..., n und $Tg^1$, $Tg^2$, ..., $Tg^n$ die Glasübergangstemperaturen der entsprechenden Homopolymeren in Grad Kelvin bedeuten. Die Glasübergangstemperaturen der Homopolymerisate der oben aufgeführten Monomeren sind bekannt und z.B. in J. Brandrup, E.H. Immergut, Polymer Handbook, 1$^{st}$ Ed., J. Wiley, New York, 1966 und 2$^{nd}$ Ed., J. Wiley, New York, 1975, aufgeführt.

Schutzkolloide, die sowohl zur Herstellung von Sekundärdispersionen der Polymeren I als auch zur Durchführung der radikalischen Öl-in-Wasser-Emulsionspolymerisation geeignet sind, sind u.a. Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organische Chemie, Band XIV/1, Makromolekulare Stoffe, Georg-Thieme-Verlag, Stuttgart, 1961, S. 411 bis 420. In gleicher Weise geeignete Öl-in-Wasser-Emulgatoren können sowohl anionischer, kationischer oder nichtionischer Natur sein und sowohl für sich als auch im Gemisch (auch mit Schutzkolloiden) angewendet werden. Selbstverständlich müssen sie im Fall der gemischten Anwendung miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind.

Gebräuchliche Öl-in-Wasser-Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als radikalische Polymerisationsinitiatoren kommen zur Durchführung der radikalischen Öl-in-Wasser-Emulsionspolymerisation vor allem im wäßrigen Medium lösliche Initiatoren in Betracht. Es kann sich dabei sowohl um Peroxide, z.B. Alkalimetallperoxidisulfate, als auch um Azoverbindungen handeln. Vorzugsweise werden kombinierte Systeme, die aus wenigstens einem Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten,

4

z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetallbisulfit und anstelle von Wasserstoffperoxid tert. Butylhydroperoxid oder Alkalimetallperoxidisulfate und/oder Ammoniumperoxidisulfate angewendet werden. Anstelle eines wasserlöslichen Eisen(II)-salzes wird häufig eine Kombination aus wasserlöslichen Fe/V-Salzen benutzt.

Die Öl-in-Wasser-Emulsionspolymerisationstemperatur und die verwendete Menge an Polymerisationsinitiatoren wird in der Regel so bemessen, daß ein zahlenmittleres Molekulargewicht $M_n$ des im wäßrigen Medium dispergierten Polymeren I von $10^3$ bis $10^8$, bevorzugt von $10^5$ bis $10^7$ erhalten wird. In der Regel beträgt die Öl-in-Wasser-Emulsionspolymerisationstemperatur 30 bis 95, bevorzugt 60 bis 95°C. Art und Menge der eingesetzten Schutzkolloide und/oder Öl-in-Wasser-Emulgatoren bestimmen im wesentlichen den mittleren Durchmesser der resultierenden dispergierten Polymerisatteilchen. Zur Herstellung von insbesondere für Anstrichstoffe als Bindemittel geeigneten Polymeren I werden sie vorzugsweise so gewählt, daß kleine im wäßrigen Medium dispergierte Polymerisatteilchen entstehen. In der Regel beträgt die Einsatzmenge 0,5 bis 5 Gew.-% bezogen auf die Gesamtmenge der zu polymerisierenden Monomeren I. Die radikalische Öl-in-Wasser-Emulsionspolymerisation kann sowohl diskontinuierlich, halbkontinuierlich in Form eines Zulaufverfahrens oder kontinuierlich durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen wenigstens einer die Monomeren I in reiner oder in emulgierter Form enthält, kontinuierlich unter Aufrechterhaltung der Polymerisation zuführt. Der Feststoffgehalt der so erhältlichen, die Polymeren I in wäßrigem Medium dispergiert enthaltenden Polymerdispersionen wird anwendungstechnisch vorteilhaft so gewählt, daß er dem für die erfindungsgemäßen wäßrigen Polymerisatzubereitung gewünschten Feststoffgehalt an Polymeren I im wesentlichen entspricht. Normalerweise liegt er daher im Bereich von 10 bis 70 Gew.-%.

Die Herstellung der Polymeren II erfolgt vorzugsweise nach dem u.a. aus den Schriften US-A-3 284 393, US-A-4 059 552, DE-A-36 41 700 und US-A-3 849 361 an sich bekannten Verfahren der radikalischen Wasser-in-Öl-Emulsionspolymerisation. Dabei werden die radikalisch zu polymerisierenden Monomeren (nachfolgend als Monomere II bezeichnet) üblicherweise zunächst in einem wäßrigen Medium, vorzugsweise nur Wasser, gelöst, wobei die Monomerenkonzentration dieser Lösung mit Vorteil 20 bis 80, besonders bevorzugt 30 bis 60 Gew.-% beträgt. Diese wäßrige Lösung wird dann normalerweise in einer hydrophoben Flüssigkeit (Ölphase), die sich hinsichtlich der nachfolgenden Polymerisation vorzugsweise inert verhält, in Gegenwart wenigstens eines Wasser-in-Öl-Emulgators emulgiert. In der Regel erfolgt das Auslösen der Polymerisation durch Einarbeiten von radikalischen Polymerisationsinitiatoren sowie gegebenenfalls sich daran anschließendes Erwärmen auf die Polymerisationstemperatur. Die Polymerisationstemperatur ist im wesentlichen abhängig vom verwendeten Polymerisationsinitiator. Normalerweise wird unter Normaldruck bei Temperaturen von 5 bis 120°C polymerisiert, wobei durch Rühren eine gute Durchmischung der Komponenten gewährleistet wird.

Erfindungsgemäß eignen sich als radikalisch polymerisierbare Monomerengemische II alle diejenigen, deren Löslichkeit bei Raumtemperatur in Wasser wenigstens 10 Gew.-% beträgt. Vorzugsweise beträgt die Löslichkeit der zu polymerisierenden Monomerengemische II bei 20°C in Wasser wenigstens 20, besonders bevorzugt wenigstens 40 Gew.-%. Die Wasserlöslichkeit der individuellen Bestandteile der Monomerengemische II, d.h. die Wasserlöslichkeit der individuellen, als Bestandteil der Monomerengemische II in Betracht kommenden Monomeren II, kann dabei in einem weiten Bereich differieren. Vorzugsweise werden als Monomere II ausschließlich nichtionische und/oder wenigstens eine anionogene Gruppe aufweisende Monomere verwendet. Als anionogene Gruppen werden solche funktionellen Gruppen betrachtet, die aus sich oder nach geeigneter Abwandlung, z.B. durch Neutralisation, in wäßrigem Medium teilweise oder vollständig ionisiert vorliegen, wobei der die ungesättigte Bindung aufweisende Teil des dissoziierten Monomeren die negative Ladung trägt. Beispiele für derartige anionogene Monomere II sind ungesättigte Säuren, deren Wasserlöslichkeit in der Regel in neutralisierter Form erhöht ist.

Mit Vorteil werden als Monomere II solche radikalisch polymerisierbaren Monomeren eingesetzt, die eine erhöhte Löslichkeit in Wasser aufweisen. Bei diesen Monomeren handelt es sich beispielsweise um monoethylenisch ungesättigte Monomere wie monoethylenisch ungesättigte $C_3$- bis $C_6$-Carbonsäuren, z.B. Acrylsäure, Methacrylsäure, Itaconsäure, Maleinsäuren oder Fumarsäure, sowie um die Amide dieser Carbonsäuren, insbesondere Acrylamid und Methacrylamid. Weitere geeignete wasserlösliche Monomere II sind beispielsweise 2-Acrylamido-2-methylpropansulfonsäure, Vinylsulfonsäure, Vinylphosphonsäure und Vinylmilchsäure. Selbstverständlich können die genannten Monomeren in partiell oder vollständig mit Basen wie Ammoniak, Aminen oder Alkalimetallhydroxiden neutralisierter Form bei der radikalischen Wasser-in-Öl-Emulsionspolymerisation verwendet werden. Geeignete Monomere II sind ferner N-Vinylpyrrolidone, N-Vinylimidazol, N-Vinylimidazolin und N-Vinylformamid. Eine weitere Gruppe von in befriedigender Weise wasserlöslichen Monomeren II sind N-Methylolamide von $C_3$- bis $C_6$-monoethylenisch ungesättigten Carbonsäuren, z.B. N-Methylolacrylamid und N-Methylolmethacrylamid. Von besonderem Interesse sind Copolymerisate II auf der Basis Acrylamid/Acrylsäure, Acrylamid/Methacrylsäure, Methacrylamid/Acrylsäure, Methacrylamid/Methacrylsäure und Acrylamid/Acrylsäure/N-Vinylpyrrolidon.

Weitere geeignete in befriedigender Weise wasserlösliche monoethylenisch ungesättigte Monomere II sind die Hydroxyalkylester von monoethylenisch ungesättigten $C_3$-$C_5$-Carbonsäuren,z.B. Hydroxyethylacrylat, Hydroxyethylmethacrylat, 2-Hydroxypropylacrylat, 3-Hydroxypropylacrylat, 3-Hydroxypropylmethacrylat, 2-Hydroxypropylmethacrylat, Hydroxybutylacrylate und Hydroxybutylmethacrylate, sowie 1,6-Hydroxyhexylacrylat. Diese Gruppe von Monomeren II kann mit den bereits genannten Monomeren II copolymerisiert werden, wobei Copolymerisate auf der Basis Acrylamid/2-Hydroxyethylacrylat, Acrylamid/Acrylsäure/2-Hydroxyethylacrylat oder Methacrylsäure/Acrylamid/2-Hydroxyethylacrylat von besonderem Interesse sind.

Erfindungsgemäß in selbstsagender Weise können die Monomerengemische II auch weniger wasserlösliche radikalisch polymerisierbare Monomere umfassen. Diese werden dabei höchstens in solchen Mengen eingesetzt, daß bei 20°C eine Wasserlöslichkeit des Gesamtgemisches von 10 Gew.-% nicht unterschritten wird. Als solche in geringerem Ausmaß wasserlösliche Monomere II kommen beispielsweise Vinylester niederer Alkancarbonsäuren wie Vinylacetat, Vinylpropionat oder Vinylbutyrat, $C_1$- bis $C_{18}$-Alkylester von monoethylenisch ungesättigten $C_3$- bis $C_6$-Carbonsäuren wie Methylacrylat, Ethylacrylat, n-Propylacrylat, iso-Propylacrylat, n-Butylacrylat, iso-Butylacrylat, n-Octylacrylat, iso-Octylacrylat, Palmitylacrylat, Stearylacrylat sowie die entsprechenden Ester der Methacrylsäure, und Halbester der Malein- sowie Itaconsäure wie Monomethylmaleinat, Monobutylmaleinat und Monoethylitaconat in Betracht.

In erfindungsgemäß obligatorischer Weise enthalten die Monomerengemische II 0,003 bis 0,3 Mol-% wenigstens eines wenigstens zwei ethylenisch ungesättigte, nichtkonjugierte Doppelbindungen aufweisenden Monomeren. Als derartige erfindungswesentliche Monomere II eignen sich Verbindungen wie N,N'-Methylen-bisacrylamid, Polyethylenglykoldiacrylate und Polyethylenglykoldimethacrylate, die sich jeweils von Polyethylenglykolen eines zahlenmittleren Molekulargewichts von 106 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, wenigstens zweifach mit Acryl- oder Methacrylsäure veresterte mehrwertige Alkohole wie Glycerin oder Pentaerythrit, Triallylamin, Tetraallylethylendiamin, Divinylbenzol, Diallylphthalat, Trimethylolpropandiallylether, Polyethylenglykoldivinylether, Butandioldivinylether, Pentaerythrittriallylether und/oder Divinylethylenharnstoff und/oder Triallylmonoalkylammoniumsalze wie z.B.Triallylmethylammoniumchlorid. Besonders bevorzugt sind dabei N,N'-Methylen-bisacrylamid, Polyethylenglykoldiacrylat, Polyethylenglykoldimethacrylat, Pentaerythrittriallylether und Divinylharnstoff, da diese eine erhöhte Wasserlöslichkeit aufweisen.

Als hydrophobes Dispersionsmedium eignen sich zur Ausführung der radikalischen Wasser-in-Öl-Emulsionspolymerisaten u.a. aliphatische und aromatische Kohlenwasserstoffe sowie deren Gemische. Beispielhaft genannt seien Pentan, Hexan, Heptan, Octan, Nonan, Decan, Cyclohexan, Methylcyclohexan, Decalin, Isooctan, Ethylcyclohexan, Benzol, Toluol, Xylol und Isopropylbenzol. Ferner eignen sich halogenierte Kohlenwasserstoffe wie Tetrachlorethan, Hexachlorethan, Trichlorethan und Chlorbenzol. Weitere hydrophobe Dispersionsmedien finden sich in der DE-PS 1 089 173. Vorzugsweise verwendet man als hydrophobes Dispersionsmedium Cyclohexan, Methylcyclohexan sowie Kohlenwasserstoffe eines Siedepunkts von 60 bis 270°C oder deren Gemische. Üblicherweise beträgt der Anteil der Ölphase am Aufbau der Wasser-in-Öl-Polymeremulsion 15 bis 70, vorzugsweise 20 bis 60 Gew.-%.

Um die wäßrige Monomerlösung in der Ölphase zu dispergieren, verwendet man die diesbezüglich an sich bekannten Wasser-in-Öl-Emulgatoren, die dadurch gekennzeichnet sind, daß sie einen HLB-Wert von höchstens 8 aufweisen. HLB steht als Abkürzung für "Hydrophile-Lipophile-Balance" des Emulgators. Der HLB-Wert beinhaltet ein gegeneinander Abwägen der Wirkung der hydrophilen und der lipophilen Gruppen des Emulgators. Eine Definition dieses Begriffes findet sich beispielsweise in "Das Atlas HLB-System", Atlas Chemie GmbH, EC 10 G July 1971 und in Classification of Surface Active Agents by "HLB", W.C. Griffin, Journal of the Society of Cosmetic Chemist, Band 1, 311 (1949).

Beispiele für geeignete Wasser-in-Öl-Emulgatoren sind Sorbitanester wie Sorbitanmonostearat, Sorbitanmonooleat, Sorbitanpalmitat oder Sorbitanlaurat oder Glycerinester, deren Säurekomponente sich von $C_{14}$- bis $C_{20}$-Carbonsäure ableitet. Besonders bevorzugte Wasser-in-Öl-Emulgatoren sind Verbindungen die durch Umsetzung von

A) $C_{10}$-$C_{22}$-Fettalkoholen mit Epichlorhydrin im Molverhältnis 1:0,5 bis 1:1,5 zu Glycidylethern,

B) anschließende Reaktion der Glycidylether mit (1) gesättigten, 2 bis 6 OH-Gruppen aufweisenden $C_2$-$C_6$-Alkoholen oder (2) deren Monoethern mit $C_{10}$-$C_{22}$-Fettalkoholen, im Molverhältnis Glycidylether zu (1) oder (2) von 1:0,5 bis 1:6 in Gegenwart von Säuren oder Basen und

C) abschließende Alkoxylierung der Reaktionsprodukte aus (B) mit mindestens einem $C_2$-$C_4$-Alkylenoxid im Molverhältnis 1:1 bis 1:6,

erhältlich und aus der DE-PS 25 57 324 bzw. der DE-OS 25 36 597 bekannt sind.

Als geeignete Radikale bildende Polymerisationsinitiatoren können zur radikalischen Wasser-in-Öl-Emulsionspolymerisation sämtliche üblicherweise auch für die radikalische Öl-in-Wasser-Emulsionspolymerisation geeigneten Polymerisationsinitiatoren verwendet werden. Bevorzugt sind wasserlösliche Polymerisationsinitiatoren wie 2,2'-Azobis(2-Amidinopropan) dihydrochlorid. Ferner eignen sich Alkalimetall- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butylper-2-ethylhexanoat, tert.-Butylpermaleinat, Bis-(tert.-butylperoxid)-cyclohexan, tert.-Butylperacetat, Dicumylperoxid, Di-tert.-amylperoxid, Di-tert.-butylperoxid, Cumylhydroperoxid, tert.-Butylhydroperoxid und p-Menthanhydroperoxid sowie Azoinitiatoren, wie 2,2'-Azobis(2-methyl-N-phenylpropionamidin)dihydrochlorid, 2,2'-Azobis(2-methylpropionamidin)-dihydrochlorid, 2,2'-Azobis(2,4-dimethylvaleronitril), 2,2'-Azobis-(isobutyronitril) und 2,2'-Azobis-[2-(2-imidazolin-2-yl)propan]-dihydrochlorid. Bevorzugte Initiatoren sind Alkalimetall- und Ammoniumpersulfate, tert.-Butylperpivalat, tert.-Butylper-2-ethylhexanoat, 2,2'-Azobis-(2,4-dimethylvaleronitril), 2,2'-Azobis(2-amidinopropan)dihydrochlorid, Azobis-(isobutyronitril) und 2,2'-Azobis[2-(2-imidazolin-2-yl)propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzlich Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisieren bei niedrigeren Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der radikalischen Wasser-in-Öl-Emulsionspolymerisation eingesetzten Monomeren II verwendet man in der Regel 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,003 bis 0,3 Mol-% Initiator, bezogen auf die eingesetzten Monomeren.

Die so erhältlichen Wasser-in-Öl-Polymerdispersionen enthalten die Polymere II normalerweise in Form von Primärteilchen mit zahlenmittleren Teilchendurchmessern von 0,1 bis 15 µm (Bestimmung mittels Transmissionselektronenmikroskopie) Normalerweise ist die ursprünglich zum Lösen der Monomeren II angewandte wäßrige Phase in den Primärteilchen enthalten, weshalb die Primärteilchen im wasserfreien Zustand einen um einen Faktor 1 bis 2 geringeren zahlenmittleren Teilchendurchmesser aufweisen können. Verwendet man zur radikalischen Wasser-in-Öl-Emulsionspolymerisation neben den bereits genannten Wasser-in-Öl-Emulgatoren gleichzeitig mit diesen verträgliche Öl-in-Wasser-Emulgatoren, werden besonders feinteilige Primärteilchen erhalten (Primärteilchen mit einem zahlenmittleren Teilchendurchmesser von 0,1 bis 10 µm werden bevorzugt eingesetzt). Vorzugsweise liegt der HLB-Wert dieser Emulgatoren nicht unter 10. Mit Vorteil handelt es sich dabei um ethoxylierte Alkylphenole oder ethoxylierte Fettalkohole. Produkte dieser Art werden beispielsweise dadurch erhalten, daß man $C_8$- bis $C_{12}$-Alkylphenole oder $C_8$- bis $C_{22}$-Fettalkohole mit Ethylenoxid umsetzt. Das Molverhältnis von Alkylphenol bzw. Fettalkohol zu Ethylenoxid beträgt dabei in der Regel 1:5 bis 1:20. Weiter gehören zu dieser Gruppe von bevorzugten Hilfsemulgatoren alkoxylierte Fettalkohole. Werden solche Hilfsemulgatoren mitverwendet, beträgt ihre Einsatzmenge, bezogen auf die zu polymerisierenden Monomeren II, in der Regel 1 bis 20, vorzugsweise 2 bis 15 Gew.-%.

In Anwendungsbereichen, in denen organische Lösungsmittel nicht besonders stören, kann man die Polymeren II aufgrund ihrer relativ geringen Einsatzmengen in einfacher Weise dadurch in die erfindungsgemäßen wäßrigen Zubereitungen einarbeiten, daß man eine entsprechende Menge der erhaltenen Wasser-in-Öl-Polymerdispersion, üblicherweise durch Einrühren, einarbeitet. Eine Anwesenheit der oben genannten Hilfsemulgatoren erweist sich dabei als vorteilhaft.

Die Polymer(II)-Teilchen lassen sich aber auch isolieren. In der Regel erfolgt dieses durch azeotropes Entwässern der erhaltenen Wasser-in-Öl-Polymerdispersionen, wobei die Primärteilchen der Polymeren II unter Anwendung geeigneter Agglomerationshilfsmittel in reversibler Weise agglomerieren. Die so agglomerierten Teilchen lassen sich im Unterschied zu den Primärteilchen in einfacher Weise isolieren. Als Isolationsverfahren kommen Filtrieren, Zentrifugieren oder Abdekantieren der Ölphase in Betracht. Der den abgetrennten agglomerisierten Polymer(II)-Teilchen noch anhaftende Anteil an Ölphase läßt sich in einfacher Weise z.B. dadurch entfernen, daß man diese Teilchen bei höheren Temperaturen und/oder unter vermin-

7

dertem Druck trocknet.

Geeignete Agglomerationshilfsmittel werden beispielsweise in der DE-OS 39 26 120 offenbart. Es handelt sich dabei um spezielle Schutzkolloide, die bereits vor oder nach Beendigung der radikalischen Wasser-in-Öl-Emulsionspolymerisation zugesetzt werden können. In besonders vorteilhafter Weise erfolgt die azeotrope Entwässerung in Gegenwart von 1 bis 20 Gew.-%, bezogen auf die Polymeren II, an agglomerisierend wirkenden Polyalkylenglykolen, die durch Anlagerung von $C_2$- bis $C_4$-Alkylenoxiden an Alkohole, Phenole, Amine oder Carbonsäuren erhältlich sind und wenigstens 2 Alkylenoxid-Einheiten einpolymerisiert enthalten, die nach Beendigung der radikalischen Wasser-in-Öl-Emulsionspolymerisation zugegeben werden.

Die als Agglomerationshilfsmittel in Betracht kommenden Polyalkylenglykole sind beispielsweise dadurch erhältlich, daß man die in Betracht kommenden Alkylenoxide, es sind dies insbesondere Ethylenoxid, Propylenoxid, Butylenoxid-1,2, Isobutylenoxid und Tetrahydrofuran, an Alkohole, Phenole, Amine oder Carbonsäuren anlagert. Die genannten Alkylenoxide und Tetrahydrofuran können entweder allein oder in Mischung polymerisiert werden. Sofern Mischungen eingesetzt werden, erhält man polymere Verbindungen, in denen die Alkylenoxid-Einheiten statistisch verteilt sind. Man kann jedoch auch die Alkylenoxide in üblicher Weise zu Blockcopolymerisaten formieren. Homopolymerisate des Ethylenoxids werden beispielsweise erhalten, indem man Ethylenoxid an Ethylenglykol anlagert. Zur Herstellung von Homopolymerisaten des Propylenoxids lagert man an Propylenglykol-1,2, Propylenglykol-1,3 oder an Mischungen der genannten Isomeren Propylenoxid an. Die Herstellung der Homopolymerisate der anderen Alkylenoxide erfolgt in entsprechender Weise.

Blockcopolymerisate werden beispielsweise dadurch hergestellt, daß man zunächst an Ethylenglykol Ethylenoxid anlagert und danach Propylenoxid unter den üblichen Bedingungen, d.h. durch Katalyse mit Alkalihydroxiden oder Calciumoxid, anlagert. Hier gibt es viele Möglichkeiten, um die Reihenfolge der Blöcke von Alkylenoxid-Einheiten zu variieren. Beispielsweise kann sich an einen Ethylenoxid-Block ein Propylenoxid-Block und dann ein Ethylenoxid-Block anschließen. Ebenso sind Polyalkylenglykole als Agglomerationshilfsmittel einsetzbar, die einen Ethylenoxid-Block, einen Propylenoid-Block und einen Butylenoxid-Block aufweisen oder Polyalkylenglykole, bei denen auf einen Propylenoxid-Block ein Ethylenoxid-Block folgt oder solche Polyalkylenoxide bei denen auf einen Butylenoxid-Block ein Propylenoxid-Block und gegebenenfalls ein Ethylenoxid-Block folgt.

Die Endgruppen der so entstehenden Polyalkylenglykole können einseitig oder auch beidseitig verschlossen sein. Einseitig verschlossene Polyalkylenglykole erhält man z.B. dadurch, daß man Alkylenoxide an Alkohole, Phenole, Amine oder Carbonsäuren anlagert. Geeignete Alkohole sind beispielsweise einwertige $C_1$- bis $C_{22}$-Alkohole, z.B. Methanol, Ethanol, n-Propanol, Isopropanol, n-Butanol, Isobutanol, n-Octanol, Isooctanol und Stearylalkohol. Als Alkohole können auch mehrwertige Alkohole eingesetzt werden, z.B. wie bereits oben erwähnt, Ethylenglykole oder Propylenglykole sowie Glycerin, Pentaerythrit und Hexandiol-1,6. Die Alkylenoxide können auch an Phenol, und substituierte Phenole, wie $C_1$- bis $C_{18}$-Alkylphenole addiert werden. Ebenso eignen sich Amine als Endgruppenverschluß, z.B. $C_1$- bis $C_{18}$-Alkyl- oder Dialkylamine sowie Diamine, vorzugsweise Ethylendiamin. Von besonderem Interesse sind hierbei handelsübliche Produkte, die beispielsweise durch nacheinander erfolgende Anlagerung von Ethylenoxid und Propylenoxid an Ethylendiamin erhältlich sind. Auch Thioalkohole, wie Mercaptoethanol, Mercaptopropanole und Mercaptobutanole, können alkoxyliert werden. Die endständigen OH-Gruppen der Polyalkylenglykole können auch beispielsweise durch Aminogruppen ersetzt sein. Ebenso eignen sich solche Polyalkylenglykole als Agglomerationshilfsmittel, deren endständige OH-Gruppen verethert oder verestert sind.

Die in Betracht kommenden Polyalkylenglykole enthalten mindestens 2 Alkylenoxid-Einheiten einpolymerisiert. Geeignete Agglomerationshilfsmittel sind beispielsweise Polyethylenglykole, Polypropylenglykole, Blockcopolymerisate aus Ethylenoxid- und Propylenoxidblöcken der Struktur EO-PO, PO-EO-PO oder EO-PO-EO, wobei EO für Ethylenoxid und PO für Propylenoxid steht, ein- oder beidseitig mit $C_1$- bis $C_4$-Alkoholen veretherte Polyethylenglykole und solche Verbindungen, die durch Anlagerung von zunächst Ethylenoxid und dann Propylenoxid oder in umgekehrter Reihenfolge an Ethylendiamin erhältlich sind. Geeignete agglomerierend wirkende Polyalkylenglykole sind z.B. Diethylenlykol, Triethylenglykol, Tetraethylenglykol, Pentamethylenglykol, Hexaethylenglykol, Heptaethylenglykol, Octaethylenglykol, Diethylenglykoldimethylether, Diethylenglykolmonomethylether, Diethylenglykoldiethylether, Diethylenglykolmonoethylether, Triethylenglykolmono- und -dimethylether, Triethylenglykolmono-und -diethylether, Dialkylenglykoldibutylether, Diethylenglykolmonobutylether, Diethylenglykolmonopropylether, Diethylenglykoldipropylether, EO-PO-Blockcopolymerisate mit mittleren Molekulargewichten von 120 bis 2 Millionen, PO-EO-PO-Blockcopolymerisate mit mittleren Molekulargewichten von 178 bis 2 Millionen und EO-PO-EO-Blockcopolymerisate mit mittleren Molekulargewichten von 164 bis 2 Millionen, Polypropylenglykol mit Molekulargewichten von 134 bis 2 Millionen, Dipropylenglykoldiacetat, Diethylenglykoldiacetat, Dipropylenglykolmonoacetat, Diethylenglykolmonoacetat, Dipropylenglykoldimethylether und Dipropylenglykolmonomethylether. Die angegebenen mittleren Molekulargewichte beziehen sich auf das Zahlenmittel. Die Agglomerationshilfsmittel werden vorzugsweise in Mengen von 5 bis 15 Gew.-%, bezogen auf das in der Wasser-in-Öl-Emulsion vorhandene Polymere II eingesetzt.

Zur azeotropen Entwässerung werden die Wasser-in-Öl-Polymerdispersionen zweckmäßigerweise mit 10 bis 200 % ihres Gewichts (vorzugsweise 5o bis 150 Gew.-%) mit einem als Schlepper geeigneten Kohlenwasserstoff mit einem Siedepunkt unter 150 °C versetzt. Vorzugsweise wird Cyclohexan angewendet. Die azeotrope Entwässerung kann dann bei Normaldruck, unter vermindertem Druck oder unter erhöhtem Druck vorgenommen werden, z.B. im Bereich 100 mbar bis 15 bar, wobei der Schlepper üblicherweise immer wieder rückgeführt wird. Die Temperaturen werden zweckmäßigerweise so gewählt, daß die Wasser-in-Öl-Polymerdispersion, die entwässert wird, keine Schädigung erfährt. Üblicherweise wird bei Temperaturen von 60 bis 170 °C entwässert. Nach der azeotropen Entwässerung liegen Agglomerationen von Primärteilchen vor (Untersuchungen dieser Agglomerationen mittels Rasterelektronenmikroskop ermöglichen in hinreichender Genauigkeit die Ermittlung der zahlenmittleren Durchmessers der wasserfreien Primärteilchen), die gemäß Siebanalyse einen zahlenmittleren Teilchendurchmesser von ca. 20 bis 500 $\mu$m aufweisen und die beim Einbringen in wäßriges Medium wieder in die Primärteilchen zerfallen. Das in der Wasser-in-Öl-Polymerdispersion enthaltene Wasser wird durch die azeotrope Destillation zu mindestens 70 %, bevorzugt zu 80 bis 99 % entfernt. Geringe Mengen an Wasser, die in den Polymeren II verbleiben, stören nicht. Sie führen im Gegenteil vielmehr dazu, daß die agglomerierten Teilchen beim Einbringen in die erfindungsgemäßen wäßrigen Zubereitungen schneller in die Primärteilchen zerfallen und daher besonders einfach in die erfindungsgemäßen wäßrigen Zubereitungen einarbeitbar sind. Andere Methoden, mittels derer erfindungsgemäße Polymere II erhalten werden können, sind z.B. die radikalische Fällungspolymerisation wie sie beispielsweise in der DE-A 17 70 371 offenbart wird oder die Lösungspolymerisation (Gelpolymerisation). Gegebenenfalls werden die dabei erhältlichen Polymerteilchen II nachträglich nach gemahlen. Besonders bevorzugte Polymere II werden auf der Monomeren-II-Basis Acrylsäure/Acrylamid/N-Vinylpyrrolidon erhalten. Ignoriert man die wenigstens zwei nicht konjugierte ethylenisch ungesättigte Doppelbindungen enthaltenden Monomeren als Bestandteile der Monomerengemische II, so setzen sich selbige vorzugsweise wie folgt zusammen:

60 bis 100 Gew.-% Acrylsäure,

0 bis 20 Gew.-% Acrylamid und

0 bis 20 Gew.-% N-Vinylpyrrolidon.

In untergeordneten Mengen können die Monomerengemische II Molekulargewichtsregler wie Ameisensäure umfassen. Ferner erfolgt die Herstellung der Polymeren II nach dem Verfahren der radikalischen Wasser-in-Öl-Emulsionspolymerisation häufig in Anwesenheit untergeordneter Mengen an mit Übergangsmetallen komplexbildenden Mitteln wie Diethylentriaminpentaessigsäure, die in der Regel eine bessere Entfaltung der Polymerisationsinitiatoren bewirken. Außerdem wird bei radikalischen Polymerisationen üblicherweise weitgehend unter Ausschluß von Luftsauerstoff polymerisiert. Eine besonders bemerkenswerte Eigenschaft der Polymerpartikel II ist, daß sie im wäßrigen Medium Wasser aufnehmen und unter Quellen in Partikel übergehen, deren Dichte von derjenigen des Wassers nur unwesentlich verschieden ist und die die Transparenz des wäßrigen Mediums im wesentlichen nicht beeinträchtigen. Die erfindungsgemäß als Mattierungsmittel eingesetzten Polymeren II rahmen daher in den erfindungsgemäßen wäßrigen Polymerisationszubereitungen im wesentlichen weder auf, noch erfolgt Sedimentation. Darüber hinaus verfügen sie über eine ausgeprägte Mattierungswirkung in den jeweiligen Verfilmungen. Bevorzugt sind Polymerpartikel II, deren Quellvermögen mit Wasser so beschaffen ist, daß ein Gemisch mit Wasser im Gewichtsverhältnis 99,5 (Wasser) : 0,5 bei 20 °C eine Brookfield Viskosität $BF^{20}_{0,5}$ oberhalb 100 mPa•s, besonders bevorzugt oberhalb 1500 mPa•s und ganz besonders bevorzugt im Bereich 1500 bis 50000 mPa•s liegend, aufweist.

Selbstverständlich können die erfindungsgemäßen Polymerisatzubereitungen neben den Polymeren I und II an sich bekannte Hilfsstoffe wie Filmbildehilfsmittel, Weichmacher, konservierend wirkende Stoffe, schaumdämpfende Mittel, verdickend wirkende Stoffe und/oder farbgebende Pigmente bzw. Füllstoffe enthalten. Insbesondere als Anstrichmittel geeignete erfindungsgemäße wäßrige Zubereitungen weisen mit Vorteil nachfolgende Zusammensetzung auf:

10 bis 50 Gew.-% wenigstens eines Öl-in-Wasser-Emulsionspolymerisates I,

0,001 bis 1 Gew.-% wenigstens eines Polymeren II,

0 bis 30 Gew.-% farbgebende Pigmente und/oder Füllstoffe,

0 bis 10 Gew.-% Filmbildehilfsmittel und

0 bis 10 Gew.-% sonstige anstrichübliche Hilfsmittel.

Als Füllstoffe kommen carbonatische, sulfatische oder silikatische Füllstoffe wie kristallines Calciumcarbonat, Glimmer, Talkum, Schwerspat, Quarzmehl oder Aluminiumsilikate in Betracht. Beispiele für farbgebende Pigmente sind Titandioxid, Chromoxid oder verschiedenfarbige Eisenoxide, einschließlich der in Holzlasuren eingesetzten transparenten Eisenoxide.

Die durchschnittliche Korngröße (d̄), als arithmetisches Mittel des jeweils größten Durchmesser, beträgt bevorzugt 0,01 bis 100 µm. Um eine homogene Verteilung der Füllstoffe und/oder Pigmente zu gewährleisten, werden in der Regel die Füllstoffe dispergierende Hilfsmittel wie Natriumhexametaphosphat, niedermolekulare Polyacrylsäure ($M_n$ = $10^3$ bis $2 \cdot 10^4$) und deren Alkalimetall- sowie Ammoniumsalze, aber auch ethoxylierte Fettalkohole (EO-Grad: 3 bis 100, Alkylrest = $C_8$- bis $C_{36}$) zugegeben. Als Filmbildehilfsmittel kommen beispielsweise Testbenzine des Siedebereichs 140 bis 210 °C, Ethylen-, Propylen-, Butylenglykol sowie deren Derivate wie Ethylenglykolmono-n-butylether oder Diethylenglykolmono-n-butylether sowie Di-(n- oder iso-)butylester der Adipin-, Glutar- oder Bernsteinsäure in Betracht. Der Begriff anstrichübliche Hilfsmittel umfaßt u.a. übliche Verdickungsmittel wie Cellulosederivate oder Polyurethane mit hydrophoben Endgruppen, Mittel zur pH-Variation wie Alkalimetallhydroxide oder Ammoniak, Antiblockmittel wie Wachse, Lichtschutzmittel wie substituierte Phenole und/oder sterisch abgeschirmte Amine sowie Korrossionsinhibitoren oder Hydrophobierungsmittel. Die erfindungsgemäßen Anstrichmittel werden beispielsweise für mineralische Untergründe wie Beton oder Asbest, ferner für Holz, Kunststoffe und Metalle besonders empfohlen. Sie können auch Teil eines mehrschichtigen Aufbaus sein. Ihre Herstellung erfolgt zweckmäßigerweise durch Verrühren der Einzelbestandteile. Sie können durch Spritzen, Streichen, Rollen, Tauchen oder Fluten auf das Substrat aufgebracht werden.

Beispiele

Beispiel 1

Herstellung von Polymeren II A bis C

In einem Polymerisationsgefäß wurde jeweils eine der nachfolgend beschriebenen Wasser-in-Öl-Monomerengemisch(II)-Emulsionen vorgelegt. Anschließend wurde bei 20 °C unter $N_2$-Atmosphäre die Hälfte der jeweils insgesamt als Polymerisationsinitiator verwendeten Menge an 2,2'-Azobis(2-amidinopropan)dihydrochlorid eingerührt und das dabei erhaltene Reaktionsgemisch 1 bis 2 Stunden bei 55 bis 60 °C polymerisiert. Anschließend wurde die zweite Hälfte der verwendeten Startermenge zugegeben und noch zwei Stunden bei 65 °C nachpolymerisiert.

500 g der so erhältlichen Wasser-in-Öl-Polymer(II)-Dispersionen wurden unter Zusatz der nachfolgend angegebenen Entwässerungshilfsmittel im Verlauf von ca. 5 h bei Temperaturen von etwa 70 bis 80 °C azeotrop entwässert. Nach Beendigung der azeotropen Destillation wurden die agglomerierten Polymer-(II)-Partikel abfiltriert und bei 50 °C im Vakuum getrocknet. Es wurden farblose, rieselfähige Pulver erhalten, die beim Eintragen in Wasser sofort zerfielen. Die Bestimmung der Brookfield Viskositäten $BF^{20}_{0,5}$ erfolgte mit einem Brookfield RVT Viskosimeter (Spindel 6), bei 50 Umdrehungen pro Minute.

Zusammensetzungen:

A:
250 g Cyclohexan
20 g eines Wasser-in-Öl-Emulgators, der erhalten wurde durch Umsetzung von
    i) Oleylalkohol mit Epichlorhydrin im Molverhältnis 1:1 zu Oleylglycidylether,
    ii) anschließende Reaktion des Oleylglycidylethers mit Glycerin im Molverhältnis 1:1 in Gegenwart von $BF_3$-Phosphorsäure (Katalysator) und einer Temperatur von 80 °C,
    iii) entfernen der Katalysators mittels eines basischen Ionenaustauschers und Ethoxylierung des erhaltenen Reaktionsproduktes mit 2 Mol Ethylenoxid.
3 g eines Öl-in-Wasser-Hilfsemulgators der durch Umsetzung von 1 Mol eines durch Oxosynthese erhaltenen $C_{12}$-$C_{15}$-Alkohols mit 6 Mol Ethylenoxid und 4 Mol Propylenoxid gewonnen wurde (dynamische Viskosität bei 23 °C = 65 mPa·s, Trübungspunkt in Wasser: 32 °C
250 g Wasser
284 g einer 48 gew.-%igen wäßrigen KOH-Lösung
175 g Acrylsäure
30 g einer 50 gew.-%igen wäßrigen Acrylamidlösung
25 g Vinylpyrrolidon
4,3 g einer 1 gew.-%igen wäßrigen Methylenbisacrylamidlösung
0,44 g einer 40 gew.-%igen wäßrigen Lösung des Pentanatriumsalzes der Diethylentriamintetraessigsäu-

10

re

0,43 g Ameisensäure

0,11 g 2,2'-Azobis(2-Amidinopropan)dihydrochlorid als Initiator

Hilfsmittel zur azeotropen Destillation:

20 g Polyethylenoxid eines $M_n$ von 300

700 g Cyclohexan.

Zahlenmittlerer Durchmesser der so entwässerten Primärteilchen IIA: 1 bis 3 $\mu$m.

Ihr $BF^{20}_{0,5}$-Wert: 4800 mPa•s.

B: 250 g Cyclohexan

20 g des für A verwendeten Wasser-in-Öl-Emulgators

3 g des für A verwendeten Öl-in-Wasser-Hilfsemulgators

340 g Wasser

223 g 50 gew.-%ige wäßrige NaOH-Lösung

200 g Acrylsäure

1,2 g einer 50,6 gew.-%igen wäßrigen Lösung des Diacrylsäureesters eines Polyethylenglykols mit $M_n$ = 1500

0,24 g 40 gew.-%ige wäßrige Lösung des Pentanatriumsalzes der Diethylentriamintetraessigsäure

0,35 g Ameisensäure

0,11 2,2'-Azobis(2-Amidinopropan)dihydrochlorid als Initiator

Hilfsmittel zur azeotropen Destillation:

10 g eines Blockcopolymerisats aus Ethylenoxid und Propylenoxid mit $M_n$ = 4600

350 g Cyclohexan.

Zahlenmittlerer Durchmesser der so entwässerten Primärteilchen IIB: 1 bis 5 $\mu$m.

Ihr $BF^{20}_{0,5}$-Wert: 1800 mPa•s.

C: 225 g Cyclohexan

18 g des für A verwendeten Wasser-in-Öl-Emulgators

21 g eines Öl-in-Wasser-Hilfsemulgators der durch Umsetzen eines Alkylphenols mit 10 mol Ethylenoxid erhalten worden war (HLB-Wert 13,5,

Trübungspunkt in Wasser 50°C, Erstarrungspunkt 10°C)

9,5 g des Schutzkolloids aus Vergleichsbeispiel 2 der älteren Anmeldung P 4103969.6

278 g Wasser

192 g einer 25 gew.-%igen wäßrigen Ammoniaklösung

180 g Acrylsäure

45 g einer 50 gew.-%igen wäßrigen Acrylamidlösung

0,28 g N,N'-Methylen-bisacrylamid

0,5 g Ameisensäure

0,17 g einer 40 gew.-%igen wäßrigen Lösung des Pentanatriumsalzes der Diethylentriaminpentaessigsäure

0,68 g 2,2'-Azobis(2-Amidinopropan)dihydrochlorid als Initiator

Hilfsmittel zur azeotropen Destillation

700 g Cyclohexan.

Zahlenmlttlerer Durchmesser der so entwässerten Primärteilchen IIC: 0,3 bis 0,5 $\mu$m.

Ihr $BF^{20}_{0,5}$-Wert: 10800 mPa•s.

Beispiel 2

Vergleich verschiedener verschiedene Mattierungsmittel enthaltender nicht pigmentierter Anstrichfarben

Allgemeine Zusammensetzung der Anstrichfarbe:

700 g einer 50 gew.-%igen wäßrigen Öl-in-Wasser-Polymer-(I)-Dispersion eines Copolymers I aus 50 gew.-% Methylmethacrylat und 50 Gew.-% 2-Ethylhexylacrylat (mittlerer Teilchendurchmesser 0,1 $\mu$m)

X g Mattierungsmittel

2 g eines 30 gew.-%igen Gemisches eines Ammoniumsalzes einer Polyacrylsäure mit $M_n$ = $5 \cdot 10^3$ in Wasser (Dispergiermittel für Mattierungsmittel)

30 g Propylenglykol

20 g Ethylenglykolmono-n-butylether

0,3 g Entschäumer (Agitan® 281, Fa. Münzing, DE)

10 g einer 25 gew.-%igen Lösung eines Diurethanverdickers in einem aus Wasser/Propylenglykol/Isopropanol im Gewichtsverhältnis 3:2:1 bestehenden Gemisch

237,7-X g Wasser

Zur Beurteilung der Anstrichfarben wurden Verfilmungen auf Glas (Naßschichtdicke 200 $\mu$m, Verfilmung bei 23°C) durchgeführt und deren Homogenität und Mattheit visuell beurteilt (0 = glänzend, 5 = sehr matt). Ferner wurde die Wasseraufnahme von 0,5 mm Trockenschichtdicke aufweisenden Verfilmungen nach 24 stündiger Wasserlagerung in % des Ursprungsgewichts nach DIN 53 495 bestimmt. Zusätzlich wurde das Aufrahmen/Sedimentieren der Mattierungsmittel in der Anstrichfarbe nach 24 stündiger Reifezeit bestimmt. Die Ergebnisse weist die Tabelle aus, die auch die Angaben über X und die Art der verwendeten Mattierungsmittel offenbart. Zum Vergleich sind auch die Ergebnisse für eine Anstrichfarbe ohne Mattierungsmittel enthalten.

Tabelle

| Mattierungsmittel | X (g) | Aufrahmen/ Sedimentieren | Homogenität | Mattheit | Wasseraufnahme (Gew.-%) |
|---|---|---|---|---|---|
| Polymer II C aus Bsp. 1 | 0,35 | - | homogen | 4 | 23 |
| Polymer II C aus Bsp. 1 | 1,0 | - | homogen | 4-5 | 24 |
| ohne | - | - | homogen | 1 | 22 |
| Glimmer* | 40 | Sed. | homogen | 4-5 | 24 |
| Amorphe Kieselsäure** | 20 | Sed. | körnig | 4-5 | 39 |
| Calciumstearat | 8 | Aufr. | körnig | 4 | 42 |

*: zahlenmittlerer Partikeldurchmesser: 8 µm
**: zahlenmittlerer Partikeldurchmesser: 5 µm
Porenvolumen: 1,8 ml/g

## Patentansprüche

1. Wäßrige Polymerisatzubereitungen, enthaltend wenigstens ein im wäßrigen Medium gelöstes und/oder dispers verteiltes polymeres Bindemittel und 0,001 bis 2 Gew.-%, bezogen auf das polymere Bindemittel, im wäßrigen Medium verteilte, von dem polymeren Bindemittel verschiedene, wasserquellbare Polymerisatteilchen, die
a) wasserfrei einen zahlenmittleren Teilchendurchmesser von 0,05 bis 15 $\mu$m aufweisen und
b) in polymerisierter Form aus einem Gemisch radikalisch polymerisierbarer Monomere aufgebaut sind, das 0,003 bis 3 Mol-% wenigstens eines wenigstens zwei nicht konjugierte ethylenisch ungesättigte Doppelbindungen aufweisenden Monomeren enthält und in nicht polymerisierter Form bei 20°C in Wasser eine Löslichkeit von wenigstens 10 Gew.-% aufweist.

2. Wäßrige Polymerisatzubereitungen nach Anspruch 1, deren polymeres Bindemittel wenigstens ein durch radikalische Öl-in-Wasser-Emulsionspolymerisation erhaltenes Polymerisat beinhaltet.

3. Wäßrige Polymerisatzubereitungen nach Anspruch 1 oder 2, deren polymeres Bindemittel wenigstens ein zu 70 bis 100 Gew.-% aus Estern der Acryl- und/oder Methacrylsäure mit 1 bis 12 C-Atomen aufweisenden Alkanolen und/oder Styrol in polymerisierter Form aufgebautes Polymerisat beinhaltet.

4. Wäßrige Polymerisatzubereitungen nach den Ansprüchen 1 bis 3, die wasserquellbare Polymerisatteilchen enthalten, die durch radikalische Polymerisation eines Monomerengemisches erhalten wurden, das folgende Zusammensetzung aufweist:
   0,003 bis 3 Mol-% wenigstens eines wenigstens zwei nicht konjugierte ethylenisch ungesättigte Doppelbindungen aufweisenden Monomeren und
   97 bis 99,997 Mol-% einer Monomerenmischung bestehend aus
60 bis 100 Gew.-% Acrylsäure,
0 bis 20 Gew.-% Acrylamid und
0 bis 20 Gew.-% N-Vinylpyrrolidon.

5. Wäßrige Polymerisatzubereitungen nach den Ansprüchen 1 bis 4, deren wasserquellbare Polymerisatteilchen durch radikalische Wasser-in-Öl-Emulsionspolymerisation erhalten worden sind.

6. Wäßrige Polymerisatzubereitungen nach den Ansprüchen 1 bis 5, deren wasserquellbare Polymerisatteilchen so beschaffen sind, daß ein Gemisch mit Wasser im Gewichtsverhältnis 99,5 (Wasser) : 0,5 bei 20°C eine Brookfield Viskosität $\geq$ 100 mPa•s aufweist.

7. Verwendung wäßriger Polymerisatzubereitungen gemäß den Ansprüchen 1 bis 6 zum Beschichten von Substraten.

8. Verwendung wasserquellbarer Polymerisatteilchen, die
a) nicht agglomeriert und wasserfrei einen zahlenmittleren Teilchendurchmesser von 0,05 bis 15 $\mu$m aufweisen und
b) in polymerisierter Form aus einem Gemisch radikalisch polymerisierbarer Monomere aufgebaut sind, das 0,003 bis 3 Mol-% wenigstens eines wenigstens zwei nicht konjugierte ethylenisch ungesättigte Doppelbindungen aufweisenden Monomeren enthält und in nicht polymerisierter Form bei 20°C in Wasser eine Löslichkeit von wenigstens 10 Gew.-% aufweist,
als Mattierungsmittel in wäßrigen Zubereitungen, die wenigstens ein, von den wasserquellbaren Polymerisatteilchen verschiedenes, polymeres Bindemittel enthalten.

9. Verfahren zur Herstellung wäßriger Polymerisatzubereitungen gemäß den Ansprüchen 1 bis 6, dadurch gekennzeichnet, daß man in wäßrige Polymerisatzubereitungen, die wenigstens ein polymeres Bindemittel enthalten, bezogen auf das polymere Bindemittel, 0,001 bis 2 Gew.-% wasserquellbare, von dem polymeren Bindemittel verschiedene, Polymerisatteilchen einarbeitet, die
a) nicht agglomeriert und wasserfrei einen zahlenmittleren Teilchendurchmesser von 0,05 bis 15 $\mu$m aufweisen und
b) in polymerisierter Form aus einem Gemisch radikalisch polymerisierbarer Monomere aufgebaut sind, das 0,003 bis 3 Mol-% wenigstens eines wenigstens zwei nicht konjugierte ethylenisch ungesättigte Doppelbindungen aufweisenden Monomeren enthält und in nicht polymerisierter Form bei 20°C in Wasser eine Löslichkeit von wenigstens 10 Gew.-% aufweist.

**Claims**

1. Aqueous polymer preparations comprising at least one polymeric binder dissolved and/or dispersed in the aqueous medium and from 0.001 to 2% by weight, based on the polymeric binder, of water swellable polymer particles dispersed in the aqueous medium which differ from the polymeric binder and which
    a) have in the anhydrous state a number average particle diameter of from 0.05 to 15 $\mu$m, and
    b) have been polymerized from a mixture of free-radically polymerizable monomers that contains from 0.003 to 3 mol% of at least one monomer having at least two nonconjugated ethylenically unsaturated double bonds and that in the unpolymerized state has a water solubility at 20°C of at least 10% by weight.

2. Aqueous polymer preparations as claimed in claim 1 whose polymeric binder comprises at least one polymer obtained by free radical oil-in-water emulsion polymerization.

3. Aqueous polymer preparations as claimed in claim 1 or 2 whose polymeric binder comprises at least one polymer containing from 70 to 100% by weight of esters of acrylic and/or methacrylic acid with alkanols of from 1 to 12 carbon atoms and/or styrene as polymerized units.

4. Aqueous polymer preparations as claimed in any of claims 1 to 3 containing water swellable polymer particles obtained by free radical polymerization of a monomer mixture of the following composition:
    from 0.003 to 3 mol% of at least one monomer having at least two nonconjugated ethylenically unsaturated double bonds, and
    from 97 to 99.997 mol% of a monomer mixture consisting of from 60 to 100% by weight of acrylic acid, from 0 to 20% by weight of acrylamide and from 0 to 20% by weight of N-vinylpyrrolidone.

5. Aqueous polymer preparations as claimed in any of claims 1 to 4 whose water swellable polymer particles have been obtained by free radical water-in-oil emulsion polymerization.

6. Aqueous polymer preparations as claimed in any of claims 1 to 5 whose water swellable polymer particles are such that a mixture with water in a weight ratio of 99.5 (water):0.5 has a Brookfield viscosity $\geq$ 100 mPa.s at 20°C.

7. The use of aqueous polymer preparations as claimed in any of claims 1 to 6 for coating substrates.

8. The use of water swellable polymer particles which
    a) in the nonaggregated and anhydrous state have a number average particle diameter of from 0.05 to 15 $\mu$m, and
    b) have been polymerized from a mixture of free radically polymerizable monomers that contains from 0.003 to 3 mol% of at least one monomer having at least two nonconjugated ethylenically unsaturated double bonds and that in the unpolymerized state has a water solubility at 20°C of at least 10% by weight,
    as delusterants in aqueous preparations containing at least one polymeric binder which differs from the water swellable polymer particles.

9. A process for preparing aqueous polymer preparations as claimed in any of claims 1 to 6, which comprises incorporating into aqueous polymer preparations containing at least one polymeric binder from 0.001 to 2% by weight, based on the polymeric binder, of water swellable polymer particles which differ from the polymeric binder and which
    a) in the nonaggregated and anhydrous state have a number average particle diameter of from 0.05 to 15 $\mu$m, and
    b) have been polymerized from a mixture of free-radically polymerizable monomers that contains from 0.003 to 3 mol% of at least one monomer having at least two nonconjugated ethylenically unsaturated double bonds and that in the unpolymerized state has a water solubility at 20°C of at least 10% by weight.

**Revendications**

1. Préparations aqueuses de polymères, contenant au moins un liant polymérique dispersé et/ou dissous dans le milieu aqueux et de 0,001 à 2% en poids, par rapport au liant polymérique, de particules de polymères gonflables à l'eau, qui diffèrent du liant polymérique, réparties dans le milieu aqueux, qui
   a) dépourvues d'eau, présentent un diamètre moyen en nombre des particules de 0,05 à 15 $\mu$m, et
   b) sous forme polymérisée, sont constituées d'un mélange de monomères polymérisables par voie radicalaire, qui contient de 0,003 à 3% molaires d'au moins un monomère présentant au moins deux doubles liaisons éthyléniquement insaturées et non conjuguées et qui, sous forme non polymérisée, présente, à 20°C, une solubilité dans l'eau d'au moins 10% en poids.

2. Préparations aqueuses de polymères suivant la revendication 1, dont le liant polymérique contient au moins un polymère obtenu par polymérisation en émulsion huile-dans-eau radicalaire.

3. Préparations aqueuses de polymères suivant la revendication 1 ou 2, dont le liant polymérique contient au moins un polymère constitué pour jusqu'à 70 à 100% en poids d'esters de l'acide acrylique et/ou de l'acide méthacrylique avec des alcanols comportant de 1 à 12 atomes de carbone et/ou le styrène, sous forme polymérisée.

4. Préparations aqueuses de polymères suivant l'une quelconque des revendications 1 à 3, qui contiennent des particules de polymères gonflables à l'eau, qui ont été obtenues par la polymérisation radicalaire d'un mélange de monomères qui présente la composition suivante :
   0,003 à 3% molaires d'au moins un monomère présentant au moins deux doubles liaisons éthyléniquement insaturées et non conjuguées, et
   97 à 99,997% molaires d'un mélange de monomères constitué de
   60 à 100% en poids d'acide acrylique
   0 à 20% en poids d'acrylamide, et
   0 à 20% en poids de N-vinylpyrrolidone.

5. Préparations aqueuses de polymères suivant l'une quelconque des revendications 1 à 4, dont les particules de polymères gonflables à l'eau ont été obtenues par polymérisation en émulsion eau-dans-huile radicalaire.

6. Préparations aqueuses de polymères suivant l'une quelconque des revendications 1 à 5, dont les particules de polymères gonflables à l'eau sont ainsi constituées qu'un mélange à l'eau dans le rapport pondéral de 99,5 (eau):0,5 présente, à 20°C, une viscosité Brookfield égale ou supérieure à 100 mPa.s.

7. Utilisation des préparations aqueuses de polymères suivant l'une quelconque des revendications 1 à 6 pour le revêtement de subjectiles.

8. Utilisation de particules de polymères gonflables à l'eau, qui
   a) à l'état non aggloméré et dépourvues d'eau, présentent un diamètre moyen en nombre des particules de 0,05 à 15 $\mu$m, et
   b) sous forme polymérisée, sont constituées d'un mélange de monomères polymérisables par voie radicalaire, qui contient de 0,003 à 3% molaires d'au moins un monomère présentant au moins deux doubles liaisons éthyléniquement insaturées et non conjuguées et qui, sous forme non polymérisée, présente, à 20°C, une solubilité dans l'eau d'au moins 10% en poids,
   à titre d'agent de matage dans des préparations aqueuses qui contiennent au moins un liant polymérique qui diffère des particules de polymères gonflables à l'eau.

9. Procédé de fabrication de préparations aqueuses de polymères suivant l'une quelconque des revendications 1 à 6, caractérisé en ce que l'on incorpore à des préparations aqueuses de polymères, qui contiennent au moins un liant polymérique, par rapport au liant polymérique, de 0,001 à 2% en poids de particules de polymères gonflables à l'eau, qui diffèrent du liant polymérique, qui
   a) à l'état non aggloméré et dépourvues d'eau, présentent un diamètre moyen en nombre des particules de 0,05 à 15 $\mu$m, et

b) sous forme polymérisée, sont constituées d'un mélange de monomères polymérisables par voie radicalaire, qui contient de 0,003 à 3% molaires d'au moins un monomère présentant au moins deux doubles liaisons éthyléniquement insaturées et non conjuguées et qui, sous forme non polymérisée, présente, à 20°C, une solubilité dans l'eau d'au moins 10% en poids.